# FASCICULE DE BREVET EUROPEEN

(11) **EP 0 430 773 B1**
(45) Date de publication et mention de la délivrance du brevet: **18.05.1994**
(21) Numéro de dépôt: 90403302.4
(22) Date de dépôt: 22.11.1990
(51) Int. Cl.: B64D 11/06

(54) **Siège blindé en matériau composite et son procédé de fabrication**
Gepanzerter Sitz aus Verbundmaterialien und Verfahren zur Herstellung
Composite armoured seat and method of production

(30) Priorité: 24.11.1989 FR 8915514
(43) Date de publication de la demande: 05.06.1991
(73) Titulaire: SOCIETE EUROPEENNE DE PROPULSION, 92150 Suresnes (FR)
(72) Inventeur: Barbaza, François R., F-33250 Pauillac (FR); Vives, Michel, F-33320 Eysines (FR)
(74) Mandataire: Joly, Jean-Jacques

(56) Documents cités:
- EP-A- 0 085 601
- EP-A- 0 293 786

## Description

La présente invention concerne un siège blindé, en particulier, mais non exclusivement, un siège blindé d'hélicoptère.

Il est bien connu de réaliser des blindages au moyen de tuiles en céramique frittée exposées à l'impact des projectiles et fixées sur une couche support, généralement formée par des strates de texture fibreuse liées entre elles.

Dans le document EP-A-0 293 786, il est proposé de simplifier la structure et la fabrication du siège en remplaçant les tuiles en céramique par un nombre limité d'éléments monolithiques en céramique qui peuvent présenter des faces formées de plusieurs plans ou des parties courbes.

L'invention a pour but de fournir également un siège dont la structure et la fabrication sont simplifiées, tout en offrant une protection très efficace.

Ce but est atteint du fait que, conformément à l'invention, le siège comprend un assemblage de panneaux en matériau composite à matrice céramique assemblés les uns aux autres par la forme et par collage.

Les matériaux composites à matrice céramique (CMC) sont formés par une texture de renfort fibreuse, ou préforme fibreuse, densifiée par une matrice céramique. La texture de renfort est constituée par exemple par des couches de tissu en fibres réfractaires telles que des fibres en carbone ou en céramique. La matrice céramique est infiltrée au sein de la porosité de la texture de renfort. La matrice est formée par infiltration chimique en phase vapeur, ou par imprégnation liquide au moyen d'un précurseur du matériau céramique de la matrice suivie par un traitement de transformation du précurseur en céramique. Des procédés de fabrication du CMC ayant une matrice en carbure (par exemple carbure de silicium) ou en oxyde (par exemple alumine ou zircone) sont décrits notamment dans les documents FR-A-2 401 888 et EP-A-0 085 601.

Les CMC ont des propriétés de dureté et de résistance en compression, avec une porosité résiduelle généralement de 10 à 15 % en volume, qui permettent de briser le noyau d'un projectile de vitesse élevée, comme les céramiques frittées utilisées dans les blindages de l'art antérieur. Par rapport à celles-ci, les CMC présentent plusieurs avantages.

Ainsi, les CMC combinent la fonction de protection avec une fonction structurale. Elles permettent de réaliser des pièces de relativement grandes dimensions pouvant supporter plusieurs impacts sans destruction totale. Ceci permet de limiter le nombre de panneaux dont l'assemblage constitue la structure du siège et de donner aux panneaux des formes particulières pour répondre aux soucis d'ergonomie. Ceci permet également de donner facilement aux panneaux les formes voulues pour réaliser un assemblage par la forme, c'est-à-dire par exemple du type tenon-mortaise.

En outre, l'énergie cinétique d'un projectile est absorbée au sein des CMC par déchaussement des fibres par rapport à la matrice, effondrement de la porosité et fléchissement des fibres de la texture de renfort, en réponse à l'impact. De la sorte, l'absorption d'énergie cinétique du projectile est réalisée avec une très faible déformation en face arrière du matériau de protection, d'où l'absence d'effet secondaire. Il s'agit là d'un avantage significatif par rapport aux matériaux connus comprenant des strates de tissu à l'arrière d'une couche frontale formée d'éléments en céramique frittée, car l'impact d'un projectile induit dans ces matériaux connus une déformation relativement importante de la face arrière ce qui, dans certains cas, peut gravement amoindrir l'effet de protection.

De plus, par rapport aux céramiques frittées, les CMC peuvent supporter une utilisation structurale à des températures supérieures à 400°C et présentent une densité inférieure (2,5 environ pour un matériau composite SiC-SiC contre 3,6 environ pour une alumine frittée).

Le collage entre les panneaux constitutifs de la texture du siège peut être obtenue par interposition d'une colle lors de l'assemblage des panneaux préfabriqués en CMC, ou, après assemblage de préformes fibreuses des panneaux, par co-densification de celles-ci par la matrice céramique du CMC.

La structure formée par les panneaux en CMC assemblés peut être garnie, en face avant du siège, c'est-à-dire la face externe exposée à l'impact, par des éléments, par exemple en céramique frittée, qui contribuent à absorber l'énergie cinétique de projectiles incidents et qui sont collés sur la structure en CMC. L'ensemble peut être complété par un revêtement ayant une fonction anti-éclats et par un habillage de finition du siège.

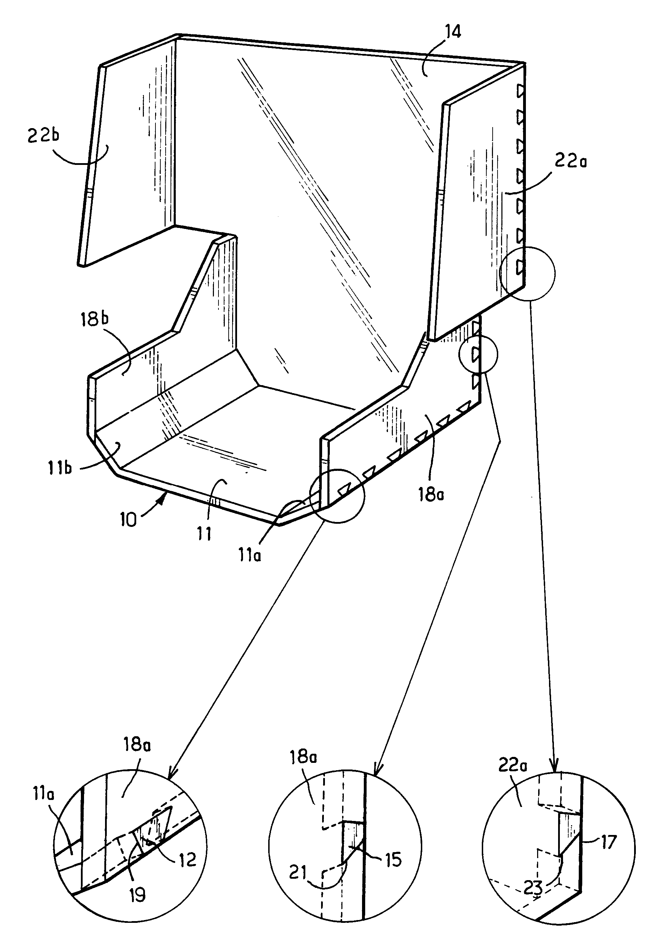

La figure unique du dessin annexé illustre un mode de réalisation d'une structure en CMC de siège blindé conforme à l'invention.

Cette structure est constituée de plusieurs panneaux en CMC assemblés entre eux et comprenant:
- un panneau 10 formant la partie inférieure du siège avec une partie 11 constituant un plateau horizontal prolongé de chaque côté par une partie inclinée vers le haut, respectivement 11a, 11b,
- un panneau 14 formant dossier ayant une plus grande largeur dans sa partie supérieure que dans sa partie inférieure,
- des panneaux latéraux inférieurs 18a, 18b ayant une partie arrière, offrant une protection latérale au niveau du bas du torse,qui est plus haute que la partie avant, offrant une protection latérale au niveau des cuisses, et qui se raccorde à celle-ci de façon progressive, et
- des panneaux latéraux supérieurs 22a, 22b offrant une protection latérale au niveau du cou, de la tête, du torse et des bras.

L'assemblage entre les panneaux est un assemblage par la forme complété par collage.

L'assemblage pour la forme est du type tenon-mortaise avec, par exemple une forme en queue d'aronde. Ainsi, le panneau 10 présente, le long des bords latéraux des parties 11a, 11b, des tenons 12 formés en une seule pièce avec le panneau, faisant saillie dans le prolongement des parties 11a, 11b et engagés dans des mortaises correspondantes 19 formées le long des bords inférieurs des panneaux latéraux inférieurs 18a, 18b. De même, le panneau 14 présente, le long des bords latéraux de sa partie inférieure, des tenons 15 formés d'une seule pièce avec le panneau et engagés dans des mortaises correspondantes 21 formées le long des bords arrières des panneaux latéraux inférieurs 18a, 18b, et, le long des bords latéraux de sa partie supérieure, des tenons 17 formés d'une seule pièce avec le panneau et engagés dans des mortaises correspondantes 23 formées le long des bords arrières des panneaux latéraux supérieurs 22a, 22b. Dans sa partie inférieure, le panneau 14 s'adapte au profil arrière du panneau 10 et des panneaux latéraux 18a, 18b. Ces derniers réalisent l'assemblage mutuel des panneaux 10 et 14. Ceux-ci pourraient également être assemblés par une liaison de type tenons-mortaises le long de leurs bords adjacents.

Les panneaux constitutifs de la structure du siège sont en CMC.

Suivant un premier mode de réalisation de l'invention, les panneaux sont préfabriqués individuellement en CMC puis assemblés avec interposition d'une colle, destinée à leur solidarisation.

Chaque panneau est par exemple réalisé en un composite de type carbone-céramique avec une texture de renfort en fibres de carbone et une matrice céramique. La texture en fibres de carbone peut être constituée d'un empilement de strates de tissu (strates bidimensionnelles) parallèles aux grandes faces du panneau. Cet empilement constitue une préforme. Celle-ci pourrait également être constituée par une texture fibreuse tridimensionnelle, par exemple formée de strates bidimensionnelles superposées et liées entre elles par aiguilletage ou implantation de fils. L'infiltration du matériau céramique de la matrice au sein de la porosité de la texture de renfort est réalisée par infiltration en phase vapeur, les strates de tissu étant maintenues par un outillage. Le matériau céramique de la matrice est par exemple du carbone de silicium (SiC). Un procédé d'infiltration de SiC en phase vapeur est décrit dans le document FR-A-2 401 888 précité. L'infiltration est poursuivie jusqu'à aboutir à une porosité résiduelle de préférence inférieure à 15 %.

En variante, les panneaux peuvent être en un composite de type céramique-céramique, par exemple de type SiC-SiC. La texture de renfort est formée de strates de tissu en fibres SiC et est densifiée par infiltration de SiC en phase vapeur.

Toujours en variante, des céramiques autres que le SiC, par exemple l'alumine, la zircone, ou le carbure de bore, peuvent être utilisées pour former la matrice des matériaux composites carbone-céramique ou céramique-céramique, ou pour former les fibres de la texture de renfort du matériau composite céramique-céramique.

Les tenons et mortaises sont avantageusement formés dans les panneaux au stade de la préforme, c'est-à-dire de la texture fibreuse de renfort. Les découpes nécessaires sont réalisées par exemple au moyen de dispositifs à laser ou à jet d'eau qui permettent des découpes précises. Ces découpes sont réalisées dans la texture fibreuse sèche ou après imprégnation ou consolidation de celle-ci. L'imprégnation consiste à lier les strates de la texture par une résine, par exemple une résine fugitive qui est ultérieurement éliminée au stade de l'infiltration de la matrice. La consolidation consiste à réaliser une première infiltration juste suffisante pour lier entre elles les strates de la texture fibreuse.

Lorsque les panneaux en CMC ont été fabriqués séparément, ils sont assemblés avec interposition d'une colle telle qu'une résine de type époxy chargée de poudre céramique.

Suivant un deuxième mode de réalisation de l'invention, les préformes des panneaux sont assemblées à l'état de textures sèches, ou imprégnées, ou consolidées, puis cet assemblage est densifié par infiltration en phase vapeur du matériau constitutif de la matrice. Celle-ci, par sa continuité aux interfaces entre les panneaux, assure le "collage" de ceux-ci entre eux. La co-densification des préformes des panneaux par la matrice céramique assure aussi une continuité de la protection balistique.

Comme déjà indiqué, la structure en CMC peut être complétée, en face avant du siège (face exposée aux impacts de projectiles) par des éléments en céramique frittée qui peuvent contribuer à l'absorption de l'énergie cinétique des projectiles. Ces éléments sont collés sur la structure en CMC au moyen d'une colle de type époxy. L'ensemble peut être muni de revêtements supplémentaires, par exemple formant une protection anti-éclats et constituant l'habillage de finition du siège.

Dans l'exemple décrit plus haut, les panneaux constitutifs de la structure en CMC ont des faces planes ou formées de plusieurs parties planes. Bien entendu, ces panneaux pourront avoir des faces non planes, par exemple incurvées, adaptées à la géométrie du siège à réaliser, puisque les CMC permettent de réaliser des pièces en forme pouvant avoir des dimensions relativement grandes. En outre, le nombre des panneaux et leur agencement mutuel pourront être différents de ceux envisagés dans cet exemple.

## Revendications

1. Siège blindé comprenant une structure formée par un assemblage de panneaux au moins partiellement en céramique, caractérisé en ce que les panneaux sont en un matériau composite à matrice céramique et sont assemblés les uns aux autres par la forme et par collage.

2. Siège selon la revendication 1, caractérisé en ce que la structure est munie, en face avant du siège, d'éléments en céramique frittée.

3. Siège selon l'une quelconque des revendications 1 et 2, caractérisé en ce que les panneaux sont en un matériau composite du type carbone-céramique.

4. Procédé de fabrication d'un siège selon la revendication 1, caractérisé en ce qu'il comprend les étapes qui consistent à :
- réaliser des préformes des panneaux en une texture fibreuse,
- former dans les préformes des parties destinées à permettre leur assemblage par la forme,
- assembler les préformes, et
- co-densifier les préformes assemblées par le matériau céramique de la matrice.

## Patentansprüche

1. Gepanzerter Sitz, bestehend aus einer Struktur, die aus einer Verbindung von wenigstens teilweise keramischen Platten gebildet ist, dadurch gekennzeichnet, daß die Platten aus einem Verbundmaterial mit einer keramischen Matrix bestehen und miteinander durch Formschluß und durch Kleben verbunden sind.

2. Sitz nach Anspruch 1, dadurch gekennzeichnet, daß die Struktur auf der Sitzvorderseite mit Elementen aus gesintertem Keramikmaterial versehen sind.

3. Sitz nach Anspruch 1 und 2, dadurch gekennzeichnet, daß die Platten aus einem Verbundmaterial des Kohlenstoff-Keramik-Typs bestehen.

4. Verfahren zur Herstellung eines Sitzes nach Anspruch 1, dadurch gekennzeichnet, daß es die Schritte umfaßt, die darin bestehen, daß:
- Vorformlinge der Platten aus einem Fasergefüge hergestellt werden,
- in den Vorformlingen Teile gebildet werden, die dazu bestimmt sind, ihre Formschlußverbindung zu ermöglichen, die Vorform linge verbunden werden, und
- die durch das Keramikmaterial der Matrix verbundenen Vorform linge werden zusammen verdichtet.

## Claims

1. Armored seat comprising a structure constituted by an assembly of panels which are at least partially made of ceramic, characterized in that the panels are made of a ceramic matrix composite and are assembled together by shape and adhesion.

2. Seat according to claim 1, characterized in that the structure is provided on the "front" face of the seat with sintered ceramic pieces.

3. Seat according to any one of claims 1 and 2, characterized in that the panels are made of a carbon-ceramic type composite.

4. Method of manufacturing a seat according to claim 1, characterized in that it comprises the steps of:
- providing panel preforms made of fiber texture,
- forming portions in the preforms suitable for enabling them to be assembled to one another by shape,
- assembling the preforms together, and
- codensifying the assembled preforms with the ceramic material of the matrix.
